(19) Europäisches Patentamt / European Patent Office / Office européen des brevets

(11) **EP 4 671 750 A1**

(12) **DEMANDE DE BREVET EUROPEEN**

(43) Date de publication:
**31.12.2025 Bulletin 2026/01**

(21) Numéro de dépôt: **24185159.1**

(22) Date de dépôt: **27.06.2024**

(51) Classification Internationale des Brevets (IPC):
**G01N 25/20** (2006.01)    **G01K 19/00** (2006.01)
**G01N 25/48** (2006.01)

(52) Classification Coopérative des Brevets (CPC):
**G01N 25/48; G01K 1/026; G01K 3/14; G01K 17/00; G01K 17/04**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(71) Demandeur: **Algochem**
**75005 Paris (FR)**

(72) Inventeurs:
- **Esposito, Thomas**
  **75005 PARIS (FR)**
- **Esprimont, Eric**
  **91120 PALAISEAU (FR)**

(74) Mandataire: **Lavoix**
**2, place d'Estienne d'Orves**
**75441 Paris Cedex 09 (FR)**

(54) **APPAREIL DE MESURE D'UN COEFFICIENT DE TRANSFERT THERMIQUE INTERNE D'UN MILIEU LIQUIDE, PROCEDE DE MISE EN OEUVRE D'UN TEL APPAREIL ET MODELISATION DUDIT COEFFICIENT**

(57)     Un appareil de mesure comprend une sonde (12) dont une partie immergeable (12a) dans un milieu réactionnel est équipée d'un organe de chauffage (15) d'une première zone (15a) de la sonde (12) dans laquelle est placé un premier organe de mesure (16) de température. Un deuxième organe de mesure (17) de température est placé dans une deuxième zone (15b) de la sonde (12) à distance (D1) de la première zone (15a). Le premier organe de mesure (16) et le deuxième organe de mesure (17) fournissent une valeur de différence de températures entre ladite première zone (15a) et ladite deuxième zone (15b) de la sonde (2), à une unité (13) d'identification, à partir de ladite différence de température, d'une valeur du coefficient de transfert thermique interne du milieu réactionnel.

FIG.3

**Description**

**DOMAINE TECHNIQUE**

L'invention relève du domaine de l'identification des caractéristiques thermiques d'un milieu à l'état liquide, tel que notamment un milieu réactionnel au cours de sa réaction. L'invention relève plus spécifiquement de la détermination en laboratoire de la valeur du coefficient de transfert thermique interne dudit milieu au cours de sa réaction à l'intérieur d'un calorimètre de réaction. L'invention s'inscrit notamment, sans être restrictif, dans le cadre d'une transposition de caractéristiques thermiques depuis un calorimètre de réaction utilisé en laboratoire vers un réacteur de plus gros volume, tel qu'un réacteur industriel - réacteur pilote ou réacteur de production d'un composé chimique.

**ETAT DE LA TECHNIQUE**

Il est courant d'évaluer et d'analyser en laboratoire la réaction thermique d'un milieu réactionnel contenu à l'intérieur d'un calorimètre de réaction à double enveloppe. La double enveloppe du calorimètre ménage une enveloppe périphérique du calorimètre et une enveloppe intérieure ménageant une cuve de réaction contenant le milieu réactionnel. Une chambre de régulation thermique du milieu réactionnel au cours de sa réaction est ménagée entre l'enveloppe périphérique et l'enveloppe intérieure du calorimètre, à l'intérieur de laquelle chambre de régulation thermique circule un fluide thermique pour réguler la température du milieu réactionnel au cours de sa réaction à une température de consigne. L'enveloppe intérieure ménageant la cuve de réaction comporte deux faces, dont une face interne orientée vers l'intérieur de la cuve - ou autrement dit du coté du milieu réactionnel - et une face externe orientée vers ladite chambre de régulation, ou autrement dit du côté du fluide thermique.

Le milieu réactionnel, tel que notamment à l'état liquide plus ou moins dense comprenant généralement au moins un réactif et fréquemment aussi au moins un solvant, est soumis au cours de sa réaction à l'intérieur de la cuve de réaction à une agitation pour favoriser l'homogénéité du milieu réactionnel au cours de sa réaction. Le fluide thermique - tel que généralement une huile thermique - circule à l'intérieur de ladite chambre de régulation pour réguler la température du milieu réactionnel à ladite température de consigne au cours de sa réaction.

Le calorimètre de réaction est communément utilisé pour mesurer la puissance thermique de la double enveloppe et en déduire la puissance thermique de la réaction chimique du milieu réactionnel. A partir des résultats obtenus en laboratoire dans un calorimètre de réaction, il est dès lors recherché de les transposer à l'échelle d'un réacteur industriel - tel que notamment un réacteur pilote ou un réacteur de production du composé chimique à produire - ou autrement dit du produit obtenu à l'issue de la réaction du milieu réactionnel.

A cet effet, différentes méthodes de calorimétries existent. Il est par exemple connu d'évaluer le coefficient d'échange thermique global entre la double enveloppe et le milieu réactionnel, à l'aide d'une résistance chauffante placée dans le milieu réactionnel hors phase de réaction du milieu réactionnel. Ceci permet de calibrer le coefficient global d'échange thermique entre le milieu réactionnel et la double enveloppe. En ayant ledit coefficient d'échange global et les mesures de température du milieu réactionnel ainsi que la température de la double enveloppe en fonction du temps, il est possible de calculer la puissance thermique qui traverse l'enveloppe du réacteur. Cependant, cette méthode ne mesure le coefficient d'échange global que ponctuellement et en dehors des phases de réaction du milieu réactionnel. Il en résulte une incertitude significative sur la mesure même de la puissance de la réaction.

Une autre méthode divulguée par le document FR2840986 utilise des capteurs de flux de chaleur pour mesurer le flux de chaleur au travers de la double enveloppe. Cette mesure permet de définir la puissance thermique au niveau de la double enveloppe et ensuite de calculer la puissance thermique de la réaction chimique en fonction du temps. Malgré l'intérêt d'une telle mesure, celle-ci ne donne cependant aucune information quant à la valeur dudit coefficient global d'échange.

Il en ressort d'une manière générale, que les méthodes de calorimétries communément utilisées ne fournissent pas d'informations fiables et précises relatives spécifiquement au coefficient d'échange thermique interne du milieu réactionnel. Or pour estimer ledit coefficient global d'échange thermique sur un réacteur industriel, il est nécessaire de disposer d'une estimation fiable du coefficient d'échange thermique interne qui correspond à l'échange thermique entre le milieu réactionnel et la face interne de l'enveloppe intérieure délimitant le réacteur et qui est orientée vers le milieu réactionnel.

**EXPOSE DE L'INVENTION**

Un but de l'invention est de prédire la température de la double enveloppe d'un réacteur industriel en fonction du temps au cours d'une réaction chimique ou physique d'un milieu réactionnel contenu à l'intérieur du réacteur industriel, et ceci dans le cadre d'un transfert d'un procédé de synthèse chimique à partir des données obtenues en laboratoire dans un calorimètre de réaction.

Il est notamment visé par l'invention d'exploiter l'identification de la valeur du coefficient d'échange thermique interne du milieu réactionnel au cours de sa réaction à partir de données obtenues en laboratoire dans un calorimètre de réaction, pour dimensionner un réacteur industriel - notamment en ce qui concerne le système de régulation thermique dont il est équipé - et/ou pour ajuster les paramètres du procédé de synthèse chimique réalisé à l'intérieur du réacteur industriel, tel que par exemple le débit de coulée du réactif, la vitesse d'agitation du milieu réactionnel et/ou la dilution du réactif dans le milieu réactionnel.

Il est cependant compris ici que ce but n'est pas exclusif à une exploitation d'un appareil de mesure et/ou de son procédé de mise en oeuvre relevant de l'invention, dans un autre cadre d'exploitation visant dans sa généralité à identifier le coefficient de transfert thermique interne d'un quelconque milieu, tel que notamment un milieu liquide, dont la température peut varier en fonction de son environnement extérieur et devant être régulée à une température de consigne.

Ainsi pour apprécier une application spécifique sans être exclusive de l'invention, les objets de l'invention sont présentés ici dans le cadre opportun d'un milieu réactionnel contenu en laboratoire dans une dite cuve d'un calorimètre de réaction, en vue d'une transposition des essais effectués en laboratoire vers un réacteur industriel produisant un composé chimique prédéfini.

Compte tenu de ce qui précède, les objets de l'invention sont au moins les suivants :

- ) un appareil de mesure permettant d'identifier la valeur du coefficient de transfert thermique interne d'un milieu, tel qu'un milieu réactionnel, ou autrement dit le coefficient d'échange thermique interne entre le milieu réactionnel et la face interne d'une double enveloppe d'un calorimètre de réaction utilisé en laboratoire, ladite face interne étant orientée vers l'intérieur de la cuve du calorimètre de réaction contenant ledit milieu, notamment un milieu réactionnel,
- ) un dit calorimètre de réaction ménageant une dite cuve de réception d'un dit milieu, le calorimètre de réaction étant équipé du dit appareil mesure ;
- ) un procédé de détermination dudit coefficient de transfert thermique interne d'un milieu mettant en oeuvre ledit appareil de mesure, et
- ) un modèle d'identification dudit coefficient de transfert thermique interne pouvant être implémenté dans un programme de dimensionnement et de contrôle du processus de mise en oeuvre d'un dit réacteur industriel - réacteur pilote ou réacteur de production d'un composé chimique prédéfini à obtenir.

Il est ici introduit des constats sur la base desquels l'invention est fondée.

Il est considéré que le coefficient d'échange global entre le milieu réactionnel et le fluide thermique est tel que :

$$P = Uglobal \; x \; A \; x \; (Tm - TDE).$$

Dans cette équation, **P** est la puissance thermique transférée entre le milieu réactionnel et le fluide thermique, **Uglobal** est le coefficient de transfert thermique global entre le milieu réactionnel et le fluide thermique, **A** est la surface d'échange thermique entre la paroi interne de l'enceinte du calorimètre et le milieu réactionnel, **Tm** est la température du milieu réactionnel et **TDE** est la température du fluide thermique.

Or, ledit coefficient d'échange global **Uglobal** entre le milieu réactionnel et le fluide thermique est composé de trois termes :

- ). Le premier terme - désignée **hint** - définit l'échange thermique interne entre le milieu réactionnel et la face interne de l'enveloppe du réacteur.
- ) Le second terme - désignée **ep / Lambdap** - définit l'échange thermique au travers de l'enveloppe intérieure du réacteur. Plus spécifiquement, le second terme identifie notamment l'épaisseur **ep** de la paroi délimitant la cuve divisée par la conductivité thermique **Lambdap** de ladite paroi.
- ) Le troisième terme - désigné **HDE** - détermine l'échange thermique entre l'enveloppe interne du calorimètre de réaction et le fluide thermique circulant à l'intérieur de ladite chambre de régulation.

Ces trois termes sont liés entre eux, et il est possible de décomposer ledit coefficient global d'échange thermique entre le milieu réactionnel et le fluide thermique selon l'équation suivante :

$$\frac{1}{UG} = \frac{1}{Hint} + \frac{ep}{Lambdap} + \frac{1}{HDE}$$

dans laquelle **UG** est ledit coefficient global d'échange thermique exprimé en W/ m$^2$°C, **hint** est le coefficient d'échange thermique interne, **ep** est l'épaisseur de la paroi exprimée en m, **Lambdap** est la conductivité thermique exprimée en W/m°C, et **HDE** est le coefficient d'échange thermique de la double enveloppe exprimée en W/m$^2$°C.

Cependant dans ce contexte, un problème posé réside dans les modalités de transposition à un réacteur industriel des résultats obtenus en laboratoire au moyen d'un calorimètre de réaction. En effet le coefficient d'échange thermique interne est très difficilement accessible car il dépend de nombreux facteurs comme entre autres la viscosité et de la conductivité thermique du milieu réactionnel, sa masse volumique ainsi que son évolution au cours de sa réaction. Il en ressort qu'il n'est pas possible d'utiliser directement un coefficient d'échange global mesuré ponctuellement sur un calorimètre de réaction, pour déterminer ledit coefficient d'échange global sur un réacteur industriel à partir d'une transposition des résultats obtenus en laboratoire dans un calorimètre de réaction.

Il peut être admis que les termes susvisés relatifs à l'échange thermique au travers de l'enveloppe intérieure du réacteur et à l'échange thermique entre l'enveloppe interne du calorimètre de réaction et le fluide thermique circulant à l'intérieur de ladite chambre de régulation, sont des termes dont les valeurs sont facilement identifiables. Cependant leur prise en compte est insuffisante pour identifier en laboratoire le coefficient d'échange thermique interne du milieu réactionnel dans un réacteur d'un calorimètre de réaction, à défaut d'une prise en compte du coefficient d'échange thermique interne du milieu réactionnel contenu dans la cuve du réacteur.

En effet, le coefficient de transfert thermique interne est un paramètre essentiel pour contrôler l'exothermie du milieu réactionnel au cours de sa réaction. Or, il est aussi fait le constat que la valeur de ce paramètre peut être exploitée pour déterminer l'échange thermique entre le milieu réactionnel et le système de régulation thermique du milieu réactionnel à l'intérieur d'un réacteur industriel. Cependant tel que précédemment mentionné, la valeur du coefficient de transfert thermique interne du milieu réactionnel et son évolution au cours de sa réaction sont difficiles à déterminer avec précision.

. Par suite, il est courant d'estimer le coefficient de transfert thermique global du milieu réactionnel au jugé par les professionnels du métier, à partir des caractéristiques connues du ou des réactif(s) et/ou du ou des solvant(s) utilisés dans le milieu réactionnel. En conséquence, la précision et la fiabilité de la valeur estimée du coefficient de transfert thermique global du milieu réactionnel en sont affectées.

Il en découle des inconvénients, tels que par exemple :

- ) un surdimensionnement par sécurité du groupe de refroidissement du réacteur industriel,
- ) une diminution du débit de coulée du réactif induisant une diminution de la productivité du procédé,
- ) une augmentation de la dilution du milieu réactionnel affectant encore davantage la productivité du procédé.

Il en ressort finalement le constat qu'une transposition des résultats obtenus en laboratoire dans un calorimètre de réaction à l'échelle d'un réacteur industriel, ne permet pas - à défaut d'une prise en compte d'une valeur précise du coefficient de transfert thermique interne du milieu réactionnel - d'élaborer un modèle mathématique suffisamment pertinent pour définir notamment une simulation d'un dimensionnement suffisant sans être excessif du réacteur industriel - notamment en ce qui concerne le groupe thermique dont il est équipé - et/ou d'un ajustement des paramètres du procédé de synthèse chimique, et/ou de la vitesse d'agitation du milieu réactionnel et/ou encore la dilution du réactif dans le milieu, tel que précédemment visé pour exemple.

Sur la base et à la lumière des constats qui viennent d'être exposés, la présente invention propose de mesurer en laboratoire en temps réel et en continu ledit coefficient d'échange thermique interne d'un milieu réactionnel à l'intérieur de la cuve d'un calorimètre de réaction. Ceci pour permettre finalement d'évaluer le coefficient d'échange thermique interne dudit milieu réactionnel à l'intérieur d'un réacteur industriel et par suite de calculer la température de la double enveloppe d'un réacteur industriel en fonction du temps au cours de la réaction du milieu réactionnel produite à l'intérieur de la cuve du réacteur industriel.

Il est plus spécifiquement proposé par l'invention d'élaborer en laboratoire dans un calorimètre de réaction un appareil de mesure du coefficient d'échange thermique interne du milieu réactionnel, la mesure effectuée étant spécifiquement et exclusivement réalisée à l'intérieur du milieu réactionnel au cours de sa réaction en laboratoire à l'intérieur de la cuve d'un calorimètre de réaction.

Puis les données fournies en laboratoire via l'appareil de mesure sont alors exploitées pour élaborer un modèle d'identification du coefficient d'échange thermique interne lui-même, qui soit fiable et pertinent pour son exploitation par un réacteur industriel en obviant aux inconvénients précédemment visés. Ce modèle peut également servir à simuler la température de la double enveloppe dudit réacteur industriel, permettant d'adapter le procédé de mise en réaction d'un milieu réactionnel à un réacteur industriel existant.

Pour se faire selon une présentation globalisée de l'invention, il est proposé par l'invention - ici synthétiquement - un appareil de mesure comportant essentiellement une sonde qui transmet notamment des données d'écarts de température d'une partie immergeable de la sonde à l'intérieur d'un milieu réactionnel au cours de sa réaction, à une unité d'identification d'une différence de température de la dite partie immergeable de la sonde à partir des données fournies à ladite unité par la sonde. A partir de la valeur de ladite différence de température de la partie immergeable de la sonde identifiée par ladite unité, l'unité est apte à déterminer la valeur du coefficient de transfert thermique interne du milieu réactionnel.

On notera dès à présent qu'accessoirement, l'appareil de mesure peut comporter en outre un capteur annexe de température qui peut est immergé directement dans le milieu réactionnel ou - et de préférence - dont la sonde est équipée. Ledit capteur annexe de température transmet la température du milieu réactionnel lui-même à la dite unité, pour avantageusement affiner la précision de la valeur du coefficient de transfert thermique interne du milieu réactionnel déterminée par la dite unité à partir de la valeur de ladite différence de température de la partie immergeable de la sonde identifiée par ladite unité.

A cet effet, une première zone de la partie immergeable de la sonde est soumise à une élévation de température par un élément de chauffage de très faible puissance. Une deuxième zone de la partie immergeable de la sonde est située à faible distance de la première zone soumise à une élévation de température par l'élément de chauffage.

Des organes de mesure des températures respectivement de la première zone et de la deuxième zone transmettent à ladite unité - tel que notamment via des signaux électriques - la différence de température entre la première zone et la deuxième zone de la partie immergeable de la sonde et en conséquence la différence de température de la partie immergeable de la sonde entre ladite première zone et ladite deuxième zone. Par suite, l'unité génère un signal électrique proportionnel au coefficient de transfert thermique interne du milieu réactionnel à l'intérieur duquel est immergée la partie immergeable de la sonde, au moins suivant son extension comportant ladite première zone et ladite deuxième zone.

Ainsi à partir de ladite différence de température de la partie immergeable de la sonde et subsidiairement par corrélation avec une mesure de la température du milieu réactionnel via ledit capteur annexe de température effectuées simultanément en temps réel et en continu au cours de la réaction du milieu réactionnel à l'intérieur d'un calorimètre de réaction, une valeur fiable et précise du coefficient de transfert thermique interne du milieu réactionnel peut être identifiée et être ensuite avantageusement modélisée.

Un tel modèle peut dès lors être implémenté dans un programme de simulation d'un procédé industriel de mise en réaction d'un milieu réactionnel à l'intérieur d'un réacteur industriel, en donnant accès au coefficient de transfert thermique global d'un réacteur industriel préalablement identifié prenant en compte la valeur du coefficient de transfert thermique interne du milieu réactionnel à partir de sa modélisation déterminée en laboratoire. Cela permet notamment d'avoir une estimation en temps réel de la température de la double enveloppe à appliquer à un réacteur industriel.

La sonde comporte ladite partie immergeable dans le milieu réactionnel en présentant une architecture et des modalités de fonctionnement fournissant directement en elle-même à ladite unité de mesure les données manquantes permettant à l'unité de mesure de déterminer le coefficient d'échange thermique interne du milieu réactionnel en temps réel et en continu tout au long de l'avancement de la réaction du milieu réactionnel. Cette prédiction va permettre par modélisation à la fois de dimensionner les groupes de chauffage et de refroidissement des réacteurs industriels, mais aussi par exemple de moduler spécifiquement les paramètres du procédé de dimensionnement et/ou le processus de mise en oeuvre du réacteur industriel afin que le modèle puisse être transposé avec pertinence sur un réacteur industriel préalablement identifié.

Autrement dit selon l'application précédemment indiquée de l'invention dans le cadre du dimensionnement et/ou du processus de mise en oeuvre d'un réacteur industriel à partir d'essais effectués en laboratoire dans un calorimètre de réaction, il est synthétiquement proposé par l'invention un appareil de mesure de structure simple et néanmoins fiable, apte à identifier la valeur du coefficient de transfert thermique interne d'un milieu réactionnel à partir de mesures de températures effectuées exclusivement à l'intérieur du milieu réactionnel au cours de sa réaction à l'intérieur de la cuve d'un calorimètre de réaction.

Puis à partir de la valeur identifiée du coefficient de transfert thermique interne du milieu réactionnel, un modèle mathématique de détermination de sa valeur est élaboré. Un tel modèle mathématique peut alors être aisément implémenté dans un programme de dimensionnement d'un réacteur industriel en évitant au mieux un surdimensionnement du groupe thermique dont il est équipé. Ce modèle peut également servir à simuler la température de la double enveloppe sur un réacteur industriel, permettant d'adapter le procédé à un réacteur industriel existant pour un composé chimique prédéfini à obtenir.

Pour se faire selon une présentation globale plus précise de l'invention, il est proposé par l'invention un appareil de mesure comportant une sonde qui loge - dans une partie immergeable de la sonde d'extension allongée plongée verticalement à l'intérieur d'un milieu réactionnel contenu dans une cuve d'un calorimètre de réaction - des organes de mesure de température identifiant une différence de températures de la partie immergeable de la sonde entre deux zones distantes. L'une première des dites zones distantes est soumise à une faible élévation de température via un élément de chauffage placée dans la dite première zone.

Un premier dit organe de mesure de température est placé en contact thermique avec ladite première zone et donc avec l'élément de chauffage. Un deuxième organe de mesure de température est placé en contact thermique avec la deuxième zone qui est distante de la première zone, et par suite le deuxième organe de mesure de température n'est pas affecté par l'élévation de température qui est produite par l'élément de chauffage dans ladite première zone de la sonde.

Subsidiairement tel que précédemment visé, l'appareil de mesure peut en outre comporter un dit capteur annexe de température mesurant la température du milieu réactionnel. Un tel capteur annexe de température peut être un capteur de température supplémentaire directement immergé exclusivement dans le milieu réactionnel ou plus avantageusement être un capteur secondaire équipant la sonde, en étant de préférence installé à l'intérieur de l'extrémité inférieure de la partie immergeable de la sonde qui est borgne et préférentiellement placé à proximité du deuxième organe de mesure de température.

L'appareil de mesure comporte aussi une unité de mesure à laquelle sont transmises en temps réel et en continu au cours de la réaction du milieu réactionnel, au moins les valeurs de températures de la sonde respectivement détectées par lesdits organes de mesure de température et le cas échéant - en cas de la présence dudit capteur annexe de température - la mesure de la température du milieu réactionnel par ledit capteur annexe de température.

Il est compris mais si besoin précisé que la sonde est agencée et structurée pour fournir à l'unité de mesure exclusivement des valeurs de températures à laquelle est soumise la sonde dans sa partie immergeable à l'intérieur du milieu réactionnel, en excluant notamment toute mesure de température de la face interne de la cuve ou de toutes autres faces des parois constitutives de la double enveloppe du calorimètre.

Au moins à partir desdites valeurs de température de la sonde, et subsidiairement de la valeur de la température du milieu réactionnel au cours de sa réaction mesurée par le capteur annexe de température, l'unité de mesure identifie la différence de températures des dites zones distantes de la partie immergeable de la sonde au cours de la réaction du milieu réactionnel. L'identification par ladite unité de mesure de ladite différence de température est génératrice par l'unité de mesure d'un signal électrique identifiant la valeur du coefficient de transfert thermique interne du milieu réactionnel.

Le cas échéant, ladite différence de température est avantageusement corrélée avec la valeur de la température du milieu réactionnel fournie à l'unité de mesure par ledit capteur annexe de température, ce qui permet d'affiner la précision de la valeur du coefficient de transfert thermique interne du milieu réactionnel identifiée par l'unité de mesure.

A titre indicatif non restrictif la puissance de chauffe de la première zone développée par l'organe de chauffage est de l'ordre comprise entre de 0,001 W et 1 W (W : Watt), en tenant compte de la distance de séparation entre la première zone et la deuxième zone de la partie immergeable de la sonde, qui à titre indicatif non restrictif est de l'ordre d'au moins 5 mm et plus avantageusement de l'ordre d'au moins 1 mm (mm : millimètre), et de préférence au plus de 3 cm (trois centimètres).

De telles valeurs données à titre indicatif sont notamment à apprécier dans le cadre d'un calorimètre d'une capacité de la cuve de l'ordre de plus ou moins 1 L (un litre) à 1,5 L (1 litre et demi). Il est néanmoins à relever que le bornage mentionné à titre indicatif de la distance de séparation entre le premier organe de mesure de température et le deuxième organe de mesure de température est potentiellement ajustable en prenant en compte les caractéristiques physico-chimique du milieu réactionnel et/ou selon la capacité du calorimètre de réaction et/ou encore selon la distance de séparation entre la première zone et la deuxième zone de la partie immergeable de la sonde.

Au moins le premier organe de mesure de température - voire aussi le deuxième organe de température - peuvent comprendre individuellement des sous organes de mesure, notamment dans le cas avantageux selon lequel le premier organe de mesure de température et le deuxième organe de mesure de température sont conjointement constitutifs d'un thermocouple. Autrement dit structurellement, le premier organe de mesure de température et le deuxième organe de mesure de température peuvent être constitutifs d'un capteur de température formé d'un thermocouple.

Il est cependant préféré tel que précédemment mentionné d'utiliser un ou plusieurs thermocouples pour former chacun individuellement un dit premier organe de mesure de température et un dit deuxième organe de mesure de température. Autrement dit dans ce cas, les sous organes de mesure constitutifs du premier organe de mesure de température et/ou du deuxième organe de mesure de température sont formés de demi-piles thermocouple. Les sous-organes de mesure de températures d'un même groupe coopérant entre eux forment alors un même capteur de température structuré en un thermocouple, en ce qui concerne le premier organe de mesure et/ou le deuxième organe de mesure.

Le ou les thermocouples sont alors reliés chacun en zone de soudures froides des thermocouples à ladite unité via une liaison filaire. Les extrémités des fils conducteurs situées en zone de soudures froides du thermocouple sont de préférence constitutives de l'organe de mesure de température qui est placé dans la première zone chauffée de la partie immergeable de la sonde - qui s'étend partiellement suivant l'extension allongée de la partie immergeable de la sonde - et qui sont reliées via ladite liaison filaire à ladite unité.

Dans le cas avantageux où les capteurs de température respectivement affectés à la première zone et à la deuxième zone de la partie immergeable de la sonde comportent chacun plusieurs thermocouples, les thermocouples constitutifs de chacun des capteurs de température sont reliés individuellement à ladite unité, via ladite liaison filaire, notamment en zone de soudures froides des thermocouples situés à l'intérieur de la première zone chauffée de la partie immergeable de la sonde. Ceci permet au moins d'optimiser la précision de ladite différence de température entre la première zone et la deuxième zone de la partie immergeable de la sonde.

Dans ce cas susvisé et selon une forme de réalisation, la sonde est équipée dans sa zone immergeable d'un jeu d'une pluralité de premières demi-piles thermocouples placées dans la première zone chauffée et d'un jeu d'une pluralité de deuxièmes demi-piles thermocouples placées dans la deuxième zone non chauffée de la partie immergeable de la sonde qui est distante de ladite première zone chauffée. Chacun des jeux de demi-piles thermocouples formant des thermocouples respectifs sont répartis sur la partie immergeable de la sonde suivant par exemple une circonférence, les thermocouples étant reliés en série et connectés à l'unité via ladite liaison filaire.

Toujours dans le cas susvisé et selon une autre forme de réalisation plus avantageuse, chacun des capteurs de température - formés chacun d'un thermocouple - comportent un jeu de demi-piles thermocouple. Le jeu demi-piles thermocouple placées dans la deuxième zone non chauffée sont réparties suivant une circonférence de la partie immergeable de la sonde et Le jeu demi-piles thermocouple placées dans la première zone chauffée de la partie immergeable de la sonde sont réparties suivant l'extension allongée de la partie immergeable de la sonde. Les thermocouples sont individuellement reliés à l'unité via ladite liaison filaire, la répartition des demi-piles thermocouple suivant l'extension allongée de la sonde permet en outre avantageusement d'évaluer l'extension de la colonne du milieu réactionnel à l'intérieur de la cuve et par suite d'identifier la surface de contact entre le milieu réactionnel et la paroi interne de la cuve.

L'unité de mesure est notamment placée au moins hors du milieu réactionnel et plus particulièrement de préférence hors de la cuve logeant le milieu réactionnel. A cet effet, la partie immergeable de la sonde est prolongée par une partie émergente de la sonde hors du milieu réactionnel - et plus spécifiquement hors de la cuve - pour sécuriser l'unité de mesure et la transmission par liaison filaire des données fournies par la partie immergeable de la sonde à l'unité de mesure, ainsi que la connexion via ladite liaison filaire entre une source de puissance électrique extérieure à la cuve et l'élément de chauffage qui est notamment formé d'une résistance électrique.

Une telle résistance électrique est avantageusement agencée sous forme d'un film d'une épaisseur de l'ordre de 0,1 mm d'épaisseur placée en contact intime autour du premier organe de mesure de température. De préférence, l'unité de mesure est équipée d'un organe paramétrable de régulation de la puissance électrique délivré à l'élément de chauffage qui produit alors une régulation de la température de la première zone de la sonde à une température de consigne pouvant évoluer selon l'élévation de température du milieu réactionnel au cours de sa réaction.

Pour simplifier l'agencement, l'organisation et la structure de la sonde, ses modalités de mise en oeuvre et sa fabrication, ladite partie immergeable et ladite partie émergente de la sonde s'étendent de préférence en prolongement l'une de l'autre suivant une extension globalement allongée de la sonde. Il n'est cependant pas à exclure que la partie immergeable et la partie émergente de la sonde puissent s'étendre suivant des directions divergentes, compte tenu de la liaison filaire, réputée plus ou moins souple, interfacée entre ladite partie immergeable de la sonde et l'unité de mesure.

La partie émergente de la sonde peut être directement porteuse de ladite unité ou plus avantageusement être reliée à ladite unité placée à distance de la sonde, notamment via ladite liaison filaire, ou potentiellement selon une variante par ondes à partir d'un émetteur installé sur la partie émergente de la sonde coopérant avec un récepteur équipant ladite unité installée à distance de la partie émergente de la sonde.

Autrement dit, l'unité est avantageusement structurée et organisé au moins en un matériel électronique de calcul en temps réel et en continu de la valeur du coefficient de transfert thermique interne du milieu réactionnel au cours de sa réaction. A partir de l'identification de la valeur du coefficient de transfert thermique interne du milieu réactionnel, un modèle d'identification de la valeur du coefficient de transfert thermique interne du milieu réactionnel peut être élaboré, tel que décrit plus loin.

Plus particulièrement, la sonde est avantageusement de conformation tubulaire en ménageant un canal interne logeant un support porteur et/ou intégrant au moins en partie les composants équipant la partie immergeable de la sonde. Pour rappel si besoin de préciser, lesdits composants comprennent au moins ledit au moins un premier organe de mesure de température, le dit au moins un deuxième organe de mesure de température, l'élément de chauffage et une première extrémité de ladite liaison filaire fixée audit support dont l'autre deuxième extrémité est reliée à la dite unité.

La paroi tubulaire de la sonde est notamment issue d'un matériau ayant une très faible épaisseur, tel que de l'ordre de 0,3 mm par exemple, et un très faible diamètre, tel que de l'ordre de 3 mm par exemple. La paroi de la sonde est d'une très grande conductivité thermique en étant avantageusement issue d'un matériau métallique, comme par exemple l'inox ou l'hastelloy, la conductivité thermique de la sonde étant de surcroît optimisée en raison de la faible épaisseur de la paroi tubulaire de la sonde.

En conséquence, la pertinence des données de températures et de leur évolution au cours de la réaction du milieu réactionnel qui sont fournies à ladite unité par le premier organe de mesure de température et le deuxième organe de mesure de température de la partie immergeable de la sonde, en est accrue. La mesure de la différence de température entre la première zone et la deuxième zone de la partie immergeable de la sonde est avantageusement potentiellement corrélée avec la valeur de la mesure de température du milieu réactionnel au cours de sa réaction par le capteur de température annexe, avec pour avantage de fournir une pertinence accrue de la valeur du coefficient de transfert thermique interne identifié par l'unité de mesure.

Le canal interne de la sonde est borgne à l'extrémité de la partie immergeable de la sonde située de préférence au plus profond de l'extension de la partie immergeable de la sonde à l'intérieur du milieu réactionnel. Ceci permet de clôturer ledit canal à l'intérieur du milieu réactionnel en interdisant tout risque d'infiltration du milieu réactionnel à l'intérieur de la sonde.

Le cas échéant, l'extrémité borgne de la sonde peut être avantageusement utilisée pour loger à l'intérieur de la partie immergeable de la sonde le capteur annexe de température et plus spécifiquement ledit capteur secondaire de mesure de la température du milieu réactionnel constitutif d'un dit capteur annexe de température. De préférence, ledit capteur secondaire de mesure est potentiellement placé à l'intérieur de la sonde à proximité - étant compris néanmoins à distance - de l'organe de mesure de la température de ladite deuxième zone de la partie immergeable de la sonde.

Dans ce cas, ladite liaison filaire est exploitée pour transmettre à l'unité de mesure la valeur de la température mesurée par le capteur secondaire. On notera aussi que ladite liaison filaire peut être avantageusement exploitée pour relier l'élément de chauffage à une source de puissance, notamment une source de puissance électrique, via laquelle l'élément de chauffage peut être alimenté en énergie en procurant potentiellement une régulation de sa température de chauffe.

Le canal intérieur de la sonde s'étend à l'intérieur de la sonde depuis son extrémité borgne vers son autre extrémité qui comporte un débouché ménageant un passage hors de la partie émergente de la sonde, via lequel passage la liaison filaire fixée au dit support émerge hors de la sonde vers ladite unité. Ledit support et les composants dont il est équipé sont ainsi protégés de tout contact avec le milieu réactionnel, qui est fréquemment corrosif.

La partie immergeable de la sonde et au moins en partie la partie émergente de la sonde, sont de préférence conjointement orientées en prolongement l'une de l'autre suivant l'extension allongée de la sonde, en formant avantageusement un corps monobloc constitutif de la sonde facilitant la manufacture de la sonde et l'architecture préférentiellement monodirectionnelle du support - avantageusement formé d'un circuit imprimé - qui peut ainsi être aisément enfilé et installé à l'intérieur du canal interne monodirectionnel de la sonde depuis son dit débouché vers son fond borgne.

Ledit circuit imprimé intègre avantageusement :

- ) les organes de mesure de température et le cas échéant ledit capteur secondaire constitutif du capteur annexe de température du milieu réactionnel,
- ) des pistes conductrices de signaux électriques ménageant des conducteurs au moins des données de températures respectivement mesurées par le premier organe de mesure de température et par le deuxième organe de mesure de température, le cas échéant des données fournies par ledit capteur secondaire, et le conducteur d'énergie électrique alimentant l'élément de chauffage. Lesdits conducteurs de signaux électriques sont connectés à ladite liaison filaire qui est fixée au circuit imprimé, à son extrémité proximale qui est sont extrémité la plus proche de ladite unité.

Le support est maintenu en position à l'intérieur dudit canal, au moins via ledit au moins un premier organe de mesure de température et ledit au moins un deuxième organe de mesure de température - et de préférence aussi via l'élément de chauffage - qui sont avantageusement fixés à l'intérieur du canal interne de la sonde à sa face interne au moyen d'une pâte thermique à forte conductivité thermique.

A partir de la valeur du coefficient de transfert thermique interne du milieu réactionnel identifiée par ladite unité, celle-ci peut-être modélisée. Le modèle d'identification de la valeur du coefficient de transfert thermique du milieu réactionnel peut être alors implémenté dans un programme de dimensionnement d'un réacteur industriel - notamment le groupe thermique dont il est équipé - et de régulation de son processus de mise en oeuvre, permettant la prédiction de l'évolution de la température de la double enveloppe au cours de l'avancement d'une réaction et par suite permettant par exemple de juguler une réaction exothermique excessive du milieu réactionnel.

Plus particulièrement, le modèle mathématique est élaboré à partir de l'équation connue de la chaleur transférée du milieu réactionnel au cours de sa réaction vers le fluide thermique de refroidissement du milieu réactionnel qui circule à l'intérieur de l'espace ménagée entre la double enveloppe du calorimètre. Cette équation se présente sous la forme suivante :

$$P = U_{global} \times A_{réacteur} \times \Delta T$$

dans laquelle $P$ est la puissance thermique transférée entre le milieu réactionnel et le fluide thermique, $U_{global}$ est le coefficient de transfert thermique global entre le milieu réactionnel et le fluide thermique dont la température est régulée par le système thermique de refroidissement ou de chauffage du fluide thermique équipant le calorimètre, $A_{réacteur}$ est la surface d'échange thermique entre la paroi interne de l'enceinte du calorimètre et le milieu réactionnel, et $\Delta T$ est la différence de température entre le milieu réactionnel et le fluide thermique - tel que couramment à titre non restrictif une l'huile - contenu dans la chambre de régulation thermique du calorimètre.

L'équation connue d'identification de Uréacteur est telle que :

$$\frac{1}{UG} = \frac{1}{Hint} + \frac{ep}{Lambdap} + \frac{1}{HDE}$$

dans laquelle **UG** - correspondant à Uglogal - est tel que précédemment mentionné le coefficient de transfert thermique global entre le milieu réactionnel et le fluide thermique, **hint** est le coefficient de transfert thermique interne du milieu réactionnel, **EP**réacteur est l'épaisseur de la paroi interne de l'enceinte du calorimètre interfacée entre le fluide thermique et le milieu réactionnel, λ**p** est le coefficient de conductivité thermique du matériau constitutif des parois de l'enceinte - notamment de la paroi interne - du calorimètre, et **H**de est le coefficient de transfert thermique du fluide thermique circulant à l'intérieur du système thermique de chauffage ou de refroidissement de l'enceinte du calorimètre via le fluide thermique.

Il est admis que **A**réacteur, **EP**réacteur, λ**p** et HDE sont des paramètres qui peuvent être aisément connus par l'homme ou la femme du métier. Cependant **hint** - ou autrement aussi désigné **hmr** - est un coefficient inconnu qui varie notamment selon la composition du milieu réactionnel, sa viscosité, la conductivité thermique du milieu réactionnel, la masse volumique, et sa vitesse d'agitation à l'intérieur du réacteur.

Dès lors tel que précédemment présenté, une approximation de cette valeur **hmr** est habituellement appliquée selon l'art connu avec pour inconvénient d'induire tel que précédemment mentionné un surdimensionnement du système thermique de chauffage ou de refroidissement du fluide thermique dont est équipé un réacteur industriel, et/ou une diminution du débit de coulée du réactif induisant une diminution de la productivité du procédé, et/ou une augmentation de la dilution du milieu réactionnel affectant encore la productivité du procédé.

A partir des données fournies par l'appareil de mesure relevant de l'invention, l'équation de la puissance thermique transmise par l'élément de chauffage dans le milieu réactionnel peut être déterminée selon l'équation suivante

$$\mathbf{Psonde} = \mathbf{Usonde} \times \mathbf{Asonde} \times \mathbf{\Delta T},$$

dans laquelle **Psonde** est la puissance thermique dissipée par l'élément de chauffage de la sonde, **U**sonde est le coefficient global d'échange thermique de la sonde, **A**sonde est .la surface d'échange effective au niveau de la partie chauffée de la sonde et Δ**T** est .la différence de température entre la zone chauffée de la sonde et la zone non chauffée de la sonde.

Il est aussi pris en compte l'équation suivante selon laquelle :

$$\frac{1}{Usonde} = \frac{1}{Hmr} + \frac{epsonde}{Lambdapsonde} + \frac{1}{Hintsonde}$$

dans laquelle **U**sonde est - tel que précédemment mentionné - le coefficient global d'échange thermique de la sonde, **hmr** est le coefficient de transfert thermique interne du milieu réactionnel au cours de sa réaction qui est la valeur recherchée, **EP**sonde est l'épaisseur de la paroi de la sonde tubulaire, λ**psonde** *(Lambdapsonde)* est la conductivité thermique du matériau constitutif de la paroi de la sonde, et **Hintsonde** est le coefficient de transfert thermique entre la sonde et la partie chauffée de la sonde.

Il est à considérer que la valeur **EP**sonde relative à l'épaisseur de la paroi de la sonde est relativement faible par rapport à la conductivité thermique λ**p** du matériau constitutif de la paroi de la sonde tel que précédemment indiqué. La pâte thermique que comporte avantageusement la sonde est particulièrement sélectionnée parmi les pâtes thermiques à forte conductivité de chaleur avec donc avec une forte valeur de **Hint** qui en résulte. Il est dès lors pris en considération que **U**sonde est peu différent de **hmr.**

Il en ressort finalement que **hmr** est peu différent à **Psonde** / (**A**sonde × Δ**Tsonde**) ou encore après étalonnage avec les milieux réactionnels connus, que **hmr** est égal à **K** / Δ**Tsonde**, **K** étant un coefficient déterminé lors dudit étalonnage. A partir des facteurs connus identifiant la ou les équations susvisées de détermination de la donnée **hmr,** l'une ou l'autre de ces équations peuvent être utilisées dans un programme de dimensionnement adéquat du système de régulation thermique équipant un réacteur industriel, pour simuler et prédire la température du fluide thermique circulant à l'intérieur de la double enveloppe du réacteur industriel.

Au titre de ce qui précède, l'invention a pour objet un appareil de mesure d'une valeur du coefficient de transfert thermique interne d'un milieu, tel qu'un milieu réactionnel, c'est-à-dire le coefficient d'échange thermique interne entre le milieu réactionnel et la face interne de la chambre de réaction d'un calorimètre.

Ledit appareil de mesure comprend au moins :

a) une sonde, ladite sonde étant au moins équipée :

*) d'au moins un organe de chauffage d'une première zone d'une partie immergeable de la sonde qui est destinée à être immergée à l'intérieur dudit milieu, et

\*) d'au moins un premier organe de mesure de température et d'au moins un deuxième organe de mesure de température, le premier organe de mesure de température étant placé en contact thermique avec la première zone de la sonde et le deuxième organe de mesure de température étant placé en contact thermique avec une deuxième zone de la partie immergeable de la sonde qui est distante de ladite première zone, ledit au moins un premier organe de mesure de température et ledit au moins un deuxième organe de mesure de température étant configurés pour fournir une valeur relative à une différence de température entre ladite première zone de la partie immergeable de la sonde et ladite deuxième zone de la partie immergeable de la sonde,

b) une unité d'identification d'une différence de température de la partie immergeable de la sonde à partir des données fournies à ladite l'unité par ladite sonde, ladite unité étant configurée pour récupérer la valeur relative à une différence de température entre ladite première zone de la partie immergeable de la sonde et ladite deuxième zone de la partie immergeable de la sonde, et pour identifier la valeur du coefficient de transfert thermique interne dudit milieu à partir d'une valeur de température du milieu et de ladite valeur relative à une différence de température entre ladite première zone de la partie immergeable de la sonde et ladite deuxième zone de la partie immergeable de la sonde.

De préférence, ledit au moins un premier organe de mesure de température et ledit au moins un deuxième organe de mesure de température sont espacés à distance l'un de l'autre sur la partie immergeable de la sonde d'une distance supérieure ou égale à 5 mm, tel qu'avantageusement supérieure ou égale à 1 cm.

Selon une forme avantageuse de réalisation, ledit au moins un premier organe de mesure de température comprend au moins une première demi-pile thermocouple et le deuxième organe de mesure de température comprend au moins une deuxième demi-pile thermocouple, ladite au moins une première demi-pile thermocouple et ladite au moins une deuxième demi-pile thermocouple étant constitutives d'un thermocouple de mesure de ladite valeur relative à une différence de température entre ladite première zone de la partie immergeable de la sonde et ladite deuxième zone de la partie immergeable de la sonde.

De préférence, le premier organe de mesure de température comprend au moins deux premières demi-piles thermocouples et le deuxième organe de mesure de température comprend au moins deux deuxièmes demi-piles thermocouples, chaque première demi-pile thermocouple formant avec une deuxième demi-pile thermocouple qui lui est affectée un thermocouple. Les thermocouples respectivement formés par lesdites au moins deux premières demi-piles thermocouples et lesdites au moins deux deuxièmes demi-piles thermocouples étant reliés en série.

Selon une forme de réalisation, le premier organe de mesure de température et le deuxième organe de mesure de température sont respectivement un premier capteur de température et un deuxième capteur de température agencés pour fournir une température respectivement de la première zone et de la deuxième zone de la partie immergeable de la sonde.

De préférence, ledit organe de chauffage est configuré pour transférer de la chaleur dans ladite première zone de la partie immergeable de la sonde, ladite première zone étant sensiblement d'extension allongée et destinée à présenter une orientation verticale à l'intérieur du milieu. Le premier organe de mesure de température comprend une pluralité de sous-organes de mesure agencés pour s'étendre le long de ladite première zone de la partie immergeable de la sonde.

Selon une forme avantageuse de réalisation, chacun des sous-organes de mesure du premier organe de mesure est une première demi-pile thermocouple. Le deuxième organe de mesure comprend, pour chacune desdites premières demi-piles thermocouples, une deuxième demi-pile thermocouple. La première demi-pile thermocouple de chacun des sous-organes de mesure du premier organe de mesure est conformée pour être connectée avec la deuxième demi-pile thermocouple correspondante du deuxième organe de mesure afin de former des thermocouples respectifs.

Par ailleurs, ladite sonde comporte en outre une partie émergente s'étendant en prolongement de ladite partie immergeable de la sonde suivant une extension allongée de la sonde, la partie émergente de la sonde étant destinée à s'étendre au moins hors du milieu. Ladite sonde est avantageusement de conformation tubulaire en ménageant un canal interne logeant ledit au moins un organe de chauffage, ledit au moins un premier organe de mesure de température et ledit au moins un deuxième organe de mesure de température. La sonde est en outre équipée d'une liaison filaire de transmission à ladite unité de la valeur relative à une différence de température entre ladite première zone de la partie immergeable de la sonde et ladite deuxième zone de la partie immergeable de la sonde, ainsi qu'un conducteur d'alimentation en énergie de l'organe de chauffage.

Selon une forme de réalisation, la sonde est en outre équipée d'un capteur de température secondaire apte à fournir une valeur de température du milieu. L'unité est en outre configurée pour récupérer la valeur de température du milieu fournie par le capteur de température secondaire.

L'invention a aussi pour objet un calorimètre comportant une chambre de réaction destinée à contenir un milieu, tel qu'un milieu réactionnel. Ledit calorimètre comprend en outre au moins un appareil de mesure d'un coefficient de transfert thermique interne du milieu tel qu'il vient d'être préalablement décrit.

L'invention a aussi pour objet un procédé de détermination d'un coefficient de transfert thermique interne d'un milieu, tel qu'un milieu réactionnel, mettant en oeuvre un appareil de mesure tel qu'il vient d'être préalablement décrit. Le procédé relevant de l'invention comprend les opération suivantes :

- ) chauffage de ladite première zone de la partie immergeable de la sonde,
- ) fourniture par ledit au moins un premier organe de mesure de température et ledit au moins un deuxième organe de mesure de température d'une valeur relative à une différence de température entre ladite première zone de la partie immergeable de la sonde et ladite deuxième zone de la partie immergeable de la sonde,
- ) récupération par l'unité de la valeur relative à une différence de température entre ladite première zone de la partie immergeable de la sonde et ladite deuxième zone de la partie immergeable de la sonde,
- ) récupération par l'unité d'une valeur de température du milieu,
- ) identification par ladite unité de la valeur du coefficient de transfert thermique interne dudit milieu à partir de la valeur de température du milieu et de ladite valeur relative à une différence de température entre ladite première zone de la partie immergeable de la sonde et ladite deuxième zone de la partie immergeable de la sonde.

Avantageusement, ledit procédé comporte une opération selon laquelle la valeur du coefficient de transfert thermique interne du milieu est identifiée par ladite unité par application de l'un quelconque des modèles mathématiques suivants selon lesquels :

$$hmr = \frac{Psonde}{Asonde\ x\ \Delta Tsonde}$$

dans lequel **Psonde** est la puissance dissipée par l'élément de chauffage de la sonde, **A**sonde est la surface effective de la zone chauffante en regard du milieu réactionnel, et **ΔTsonde** est.la mesure de différence de température entre les deux zones de la sonde, ou

$$hmr = \frac{K}{\Delta T}$$

dans lequel **ΔT** est la mesure de différence de température entre les deux dites zones de la sonde, et **K** est un coefficient déterminé lors d'un étalonnage.

Un tel étalonnage est opéré en usine, en utilisant généralement un solvant ou un corps pur permettant d'avoir une grande amplitude de travail en température. Sur l'amplitude de la gamme de températures, le paramètre **K** est déterminé en injectant dans le milieu réactionnel une forte puissance, de l'ordre de la dizaine de Watt. Cela permet d'obtenir une différence de température entre le milieu réactionnel et la double enveloppe. En utilisant par exemple des capteurs de flux de chaleur, on peut déterminer ponctuellement le coefficient d'échange global avec l'équation suivante :

## Ug = Flux de chaleur / (Tm-Tde).

Dans cette équation **Ug** est le coefficient d'échange global en $Wm^2k$, **Flux de chaleur** est le flux de chaleur en $W/m^2$ au travers de la double enveloppe, **Tm** est la température du milieu réactionnel et **Tde** est la température du fluide thermique.

Pour chaque température de milieu réactionnel, il est fait varier la vitesse d'agitation du milieu réactionnel, de manière à faire varier uniquement le coefficient d'échange thermique interne. Il est alors obtenu des différences de coefficient d'échange thermique interne qu'il est possible de corréler avec les variations de différences de température identifiées de la sonde. Ainsi les coefficients recherchés sont identifiés et permettent d'obtenir le coefficient d'échange thermique interne du milieu réactionnel à partir des informations fournies par la sonde.

De préférence, le procédé permet en outre la détermination d'un coefficient de transfert thermique global entre une double enveloppe et le milieu, le procédé étant mis en oeuvre au moyen d'un réacteur comportant une chambre de réaction contenant le milieu et une double enveloppe délimitant ladite chambre de réaction, dans laquelle double enveloppe étant ménagée une chambre de régulation thermique du milieu, ledit procédé de détermination d'un coefficient de transfert d'un milieu comprenant en outre une opération supplémentaire de détermination, à partir d'une température double enveloppe TDE et du coefficient de transfert thermique interne identifié pour le milieu, une puissance thermique de la double enveloppe, et éventuellement une puissance thermique d'une réaction chimique du milieu.

De préférence, le procédé comprend en outre une opération supplémentaire de détermination d'un coefficient de transfert thermique interne d'un milieu pour un réacteur industriel ou d'un coefficient de transfert thermique global pour ce même réacteur industriel à partir du coefficient de transfert thermique interne déterminé par l'unité.

## PRESENTATION DES FIGURES

L'invention sera mieux comprise à la lecture de la description détaillée qui suit d'exemples de réalisation de l'invention, en relation avec les figures suivantes des planches annexées :

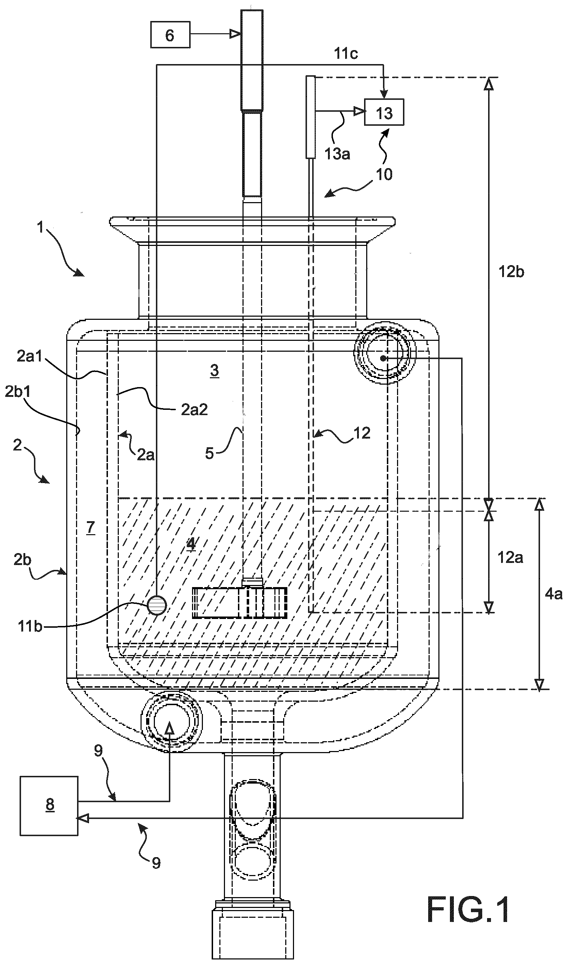

La figure 1 (FIG.1), est une illustration d'un calorimètre de réaction à double enveloppe utilisé en laboratoire, comportant une cuve ménageant une chambre de réaction qui est délimitée par l'enveloppe interne que comporte le calorimètre et qui contient un milieu réactionnel. Le calorimètre de réaction est équipé d'un appareil de mesure conforme à la présente invention, permettant de déterminer la valeur du coefficient de transfert thermique interne du milieu réactionnel au cours de sa réaction à l'intérieur de la chambre de réaction du calorimètre.

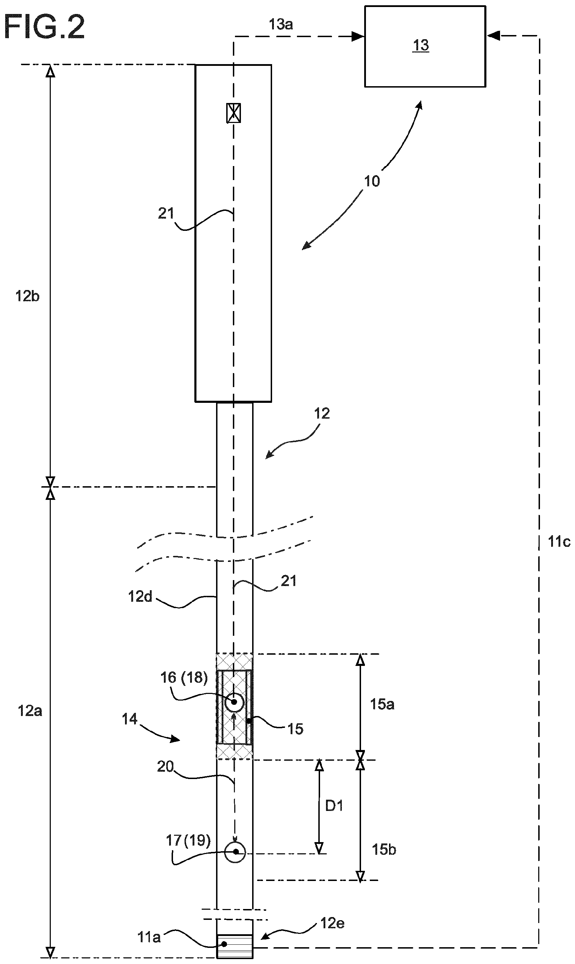

La figure 2 (FIG.2 ), est une illustration schématique d'un exemple de réalisation d'un dit appareil de mesure conforme à la présente invention, qui est structuré et organisé pour identifier une différence de températures d'une sonde que comprend ledit appareil de mesure représenté sur la figure 1. Une partie inférieure de la sonde est immergeable à l'intérieur du milieu réactionnel en comportant deux organes de mesure de température distants l'un de l'autre, l'un desdits organes de mesure étant placé dans une zone chauffée de la partie immergeable de la sonde.

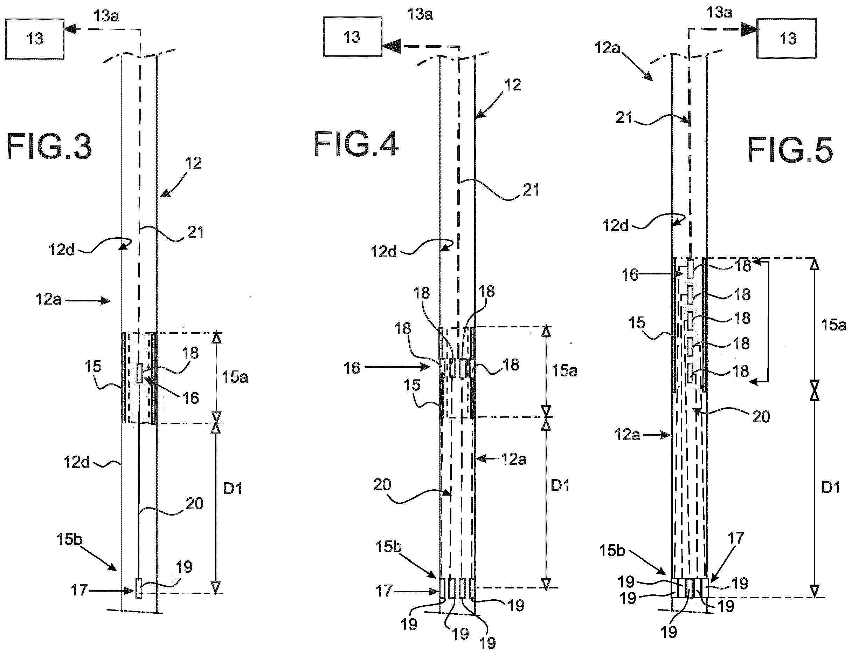

La figure 3 (FIG.3), est une illustration schématique partielle d'un premier exemple spécifique de réalisation de ladite sonde représentée sur les figures 1 et 2. Sur la figure 3, la sonde est équipée à sa partie inférieure immergeable dans le milieu réactionnel d'un thermocouple comprenant un couple de demi-piles thermocouples, dont une première demi-pile thermocouple placée dans ladite zone chauffée et dont une deuxième demi-pile thermocouple placée à distance de ladite zone chauffée.

La figure 4 (FIG.4), est une illustration schématique partielle d'un deuxième exemple spécifique de réalisation de ladite sonde représentée sur les figures 1 et 2. Sur la figure 4, la sonde est équipée d'une pluralité de thermocouples à sa partie inférieure immergeable dans le milieu réactionnel, comprenant chacun un jeu de dites demi-piles thermocouple. Les demi-piles thermocouple de chacun des jeux de demi-piles thermocouple sont réparties suivant une circonférence de la partie immergeable de la sonde.

La figure 5 (FIG.5), est une illustration schématique partielle d'un troisième exemple spécifique de réalisation de ladite sonde représentée sur les figures 1 et 2. Sur la figure 5. La sonde est équipée à sa partie inférieure immergeable dans le milieu réactionnel d'un jeu de cinq thermocouples comportant chacun un jeu de demi-piles thermocouple réparties pour l'un desdits jeu de demi-piles thermocouple suivant l'extension allongée de la sonde et pour un autre jeu de demi-piles thermocouple réparties suivant une circonférence de la partie immergeable de la sonde..

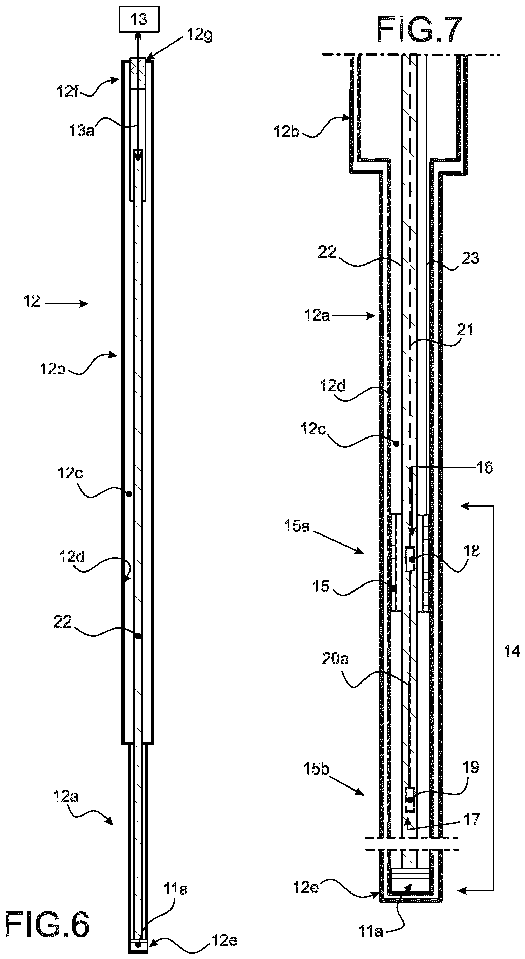

La figure 6 (FIG.6), est une illustration schématique d'un exemple d'architecture globale d'une sonde relevant de la présente l'invention. Sur la figure 6 la sonde est une sonde tubulaire d'extension globalement allongée, qui ménage un canal interne s'étendant le long d'une partie inférieure immergeable de la sonde qui est prolongée par une partie supérieure de la sonde suivant son extension globalement allongée, la partie supérieure de la sonde étant organisée pour émerger hors du milieu réactionnel.

La figure 7 (FIG.7), est une illustration schématique de la partie inférieure de la sonde représentée sur la figure 6, logeant à l'intérieur du canal interne de la sonde un support équipé d'un dispositif de mesure de températures en deux zones - dont une zone chauffée - de la partie immergeable de la sonde, le dispositif de mesure de températures étant participant d'un dit appareil de mesure conforme à l'invention.

## DESCRIPTION DETAILLEE DES FIGURES

Les figures et leur description détaillée non limitative, exposent l'invention selon des modalités particulières qui ne sont pas restrictives quant à la portée de l'invention. Les figures et leur description détaillée peuvent servir à mieux appréhender et définir l'invention, si besoin en relation avec la description générale qui vient d'en être faite. Il est notamment à relever que l'utilisation de l'appareil de mesure relevant de l'invention à l'intérieur de la chambre de réaction d'un calorimètre de réaction, n'est pas restrictive à l'utilisation de l'appareil de mesure à d'autres cadres d'application d'une mesure de température d'un quelconque milieu réactif au cours de sa réaction. Par ailleurs pour éviter une surcharge des figures et ainsi faciliter leur lecture, les numéros de référence affectés aux termes et/ou aux notions utilisés pour décrire l'invention et indiqués sur l'une quelconque des figures, sont potentiellement repris dans la description d'une quelconque autre figure sans impliquer leur présence sur l'ensemble des figures.

Sur la figure 1, un calorimètre 1 comporte une double enveloppe 2, dont une enveloppe interne 2a et une enveloppe externe 2b. L'enveloppe interne 2a délimite une cuve ménageant une chambre de réaction 3 contenant un milieu réactionnel 4 composé par exemple d'un réactif et d'un solvant. La chambre de réaction 3 est équipée d'un agitateur 5 plongeant à l'intérieur du milieu réactionnel 4 en étant entrainé en mobilité par une motorisation 6 pour favoriser l'homogénéité du milieu réactionnel 4.

Sur la figure 1, il est illustré un appareil de mesure 10 conforme à l'invention équipant le calorimètre 1. Ledit appareil de mesure 10 comprend synthétiquement au moins une sonde 12 et une unité 13 de mesure d'une valeur du coefficient de transfert thermique interne du milieu réactionnel 4, à partir de données d'une différence de températures de la sonde 12 transmises à ladite unité 13, tel que décrit plus loin en relation avec les figures 2 à 7.

Subsidiairement, l'appareil de mesure 10 peut aussi comporter un capteur annexe de température mesurant la valeur de la température 11c du milieu réactionnel 4 lui-même au cours de sa réaction, qui peut être avantageusement transmise à la dite unité 13 et ainsi être potentiellement exploitées pour affiner la valeur du coefficient de transfert thermique du milieu 4 réactionnel identifiée par l'appareil de mesure 10 à partir des dites données de différences de températures fournies par la sonde 12 à l'unité 13. Selon l'exemple de réalisation d'un tel capteur annexe de température illustré sur la figure 1, celui-ci est un capteur de température qualifié supplémentaire 11b qui est indépendamment de la sonde directement immergé dans le milieu réactionnel 4.

On notera dès à présent que ledit capteur supplémentaire 11b constitutif d'un dit capteur annexe de température du milieu réactionnel 4, peut-être avantageusement remplacé par un capteur secondaire 11a équipant la sonde 12 de température illustré sur la figure 2 et sur les figures 5 et 6 comme décrit plus loin.

Toujours sur le figure 1, le volume délimité entre la face interne 2b1 de l'enveloppe externe 2b et la face externe 2a1 de l'enveloppe interne 2a de la double enveloppe 2 du calorimètre 1, ménage une chambre de régulation thermique 7 du milieu réactionnel 4 qui est soumis à une différence de température au cours de sa réaction. La chambre de régulation thermique 7 permet de maintenir le milieu réactionnel 4 à une température de consigne pour obtenir le produit issu de la réaction du milieu réactionnel 4. A cet effet, le calorimètre 1 est classiquement équipé d'un système thermique au moins comportant un groupe thermique 8 de régulation de la température d'un fluide thermique 9 - tel qu'une huile par exemple - qui circule à l'intérieur de la chambre de régulation thermique 7.

On notera sur la figure 1, que la sonde 12 est d'extension principalement allongée, et comporte à sa base une partie immergeable 12a dans le milieu réactionnel 4, en étant orientée suivant une direction verticale correspondante à la colonne 4a d'extension du milieu réactionnel 4 à l'intérieur de la chambre de réaction 3 sous l'effet de la gravité. Suivant l'extension allongée de la sonde 12, la sonde 12 comporte en prolongement de sa partie immergeable 12a une partie émergente 12b qui est organisée pour s'étendre hors du milieu réactionnel 4 jusqu'à émerger hors de la chambre de réaction 3 et ensuite hors du calorimètre 1.

La partie immergeable 12a de la sonde 12 est organisée pour détecter une différence de température du milieu réactionnel 4 au cours de sa réaction, suivant l'extension verticale de la partie immergeable 12a allongée de la sonde 12 à l'intérieur du milieu 4 réactionnel. La partie émergente 12b de la sonde 12 est connectée à l'unité 13, tel que notamment par une liaison filaire 13a comme illustré sur les exemples de réalisation de l'invention illustrés sur les figures 1 à 6.

L'unité 13 identifie alors la valeur d'une différence de température de la partie immergeable 12a de la sonde 12 et son évolution en continu et en temps réel au cours de la réaction du milieu 4 réactionnel, à partir de données de températures qui sont mesurées par des organes de mesure de température équipant la partie immergeable 12a de la sonde 12, tel que décrit plus loin en relation avec les figures 2 à 7. De préférence l'unité 13 dispose aussi d'une dite donnée de température 11c fournie par le dit capteur annexe de température - capteur secondaire 11a ou capteur supplémentaire 11b - pour affiner la valeur du coefficient de transfert thermique interne du milieu réactionnel 4 au cours de sa réaction qui est essentiellement obtenue à partir des données de températures fournies par la sonde 12 à l'unité 13.

Par suite à partir de l'identification par l'unité 13 au cours de la réaction du milieu 4 réactionnel, d'une part de la différence de température de la partie immergeable 12a de la sonde 12 en deux zones distinctes de la sonde 12 comme décrit plus loin en relation avec les figures 2 à 7, et d'autre part de préférence aussi à partir de la température du milieu réactionnel 4 mesurée par un dit capteur annexe de température - capteur secondaire 11a ou capteur supplémentaire 11b - l'unité 13 détermine la valeur du coefficient de transfert thermique propre au milieu réactionnel 4.

Sur la figure 2, la sonde 12 est schématiquement représentée en station verticale suivant son extension allongée. La sonde 12 est équipée à sa partie immergeable 12a d'un moyen de détection d'une différence de température de sa partie immergeable 12a au cours de la réaction du milieu réactionnel 4. On notera sur la figure 2, la présence dudit capteur secondaire 11a dont elle est équipée, en substitution du capteur supplémentaire 11b précédemment mentionné en relation avec la figure 1.

Selon l'exemple de réalisation illustré sur les figures 2, 6 et 7, le capteur secondaire 11a est installé à l'intérieur de la partie immergeable 12a de la sonde 12 à sa base, ou autrement dit à l'intérieur de l'extrémité inférieure 12e de la sonde 12 qui est borgne tel que visé par la suite. Tel qu'indiqué sur la figure 2, la partie immergeable 12a de la sonde 12 est équipé d'un dispositif de mesure 14 d'une différence de température à laquelle est soumise la paroi 12d de la sonde 12 à sa partie immergeable 12a.

Comme illustré sur les figures 2 à 7, ledit dispositif de mesure 14 comprend au moins :

- ) un organe de chauffage 15 de faible puissance, à titre indicatif non restrictif d'une puissance de chauffe de l'ordre comprise entre de 0,001 W et 1 W (W : Watt). L'organe de chauffage 15 génère de la chaleur dans une première zone 15a de la partie immergeable 12a de la sonde 12, qui s'étend partiellement le long de la partie immergeable 12a de la sonde 12 suivant son extension allongée.

- ) un premier organe de mesure 16 de température équipant la partie immergeable 12a de la sonde 12, qui est en contact thermique avec ladite première zone 15a qui est chauffée par l'organe de chauffage 15.

- ) un deuxième organe de mesure 17 de température équipant la partie immergeable 12a de la sonde 12, qui est en contact thermique avec une deuxième zone 15b de la sonde 12 en étant placé à distance D1 de la première zone 15a qui est référencée sur la figure 2 à 5 et 7.

A titre indicatif non restrictif, la distance D1 de séparation entre le premier organe de mesure 16 et le deuxième organe de mesure 17 est potentiellement comprise entre 5°mm et 3 cm, pour exemple à titre indicatif dans le cadre non exclusif d'un calorimètre 1 de réaction dont le volume de la chambre de réaction 3 est de l'ordre compris entre 1 litre et 1,5 litre.

Le premier organe de mesure 16 identifie la température de ladite première zone 15a chauffée et le deuxième organe de mesure 17 identifie la température de ladite deuxième zone 15b de la partie immergeable 12a de la sonde 12 non chauffée. Le premier organe de mesure 16 de température et le deuxième organe de mesure 17 de température, permettent de détecter une différence de température entre ladite première zone 15a et ladite deuxième zone 15b de la partie inférieure 12a de la sonde 12, et de fournir à l'unité de mesure 13, notamment par voie filaire 21 électro-conductrice, les données relatives à une telle différence de température.

L'unité de mesure 13 identifie alors la valeur de la différence de température de la partie immergeable 12a de la sonde 12 située entre le premier organe de mesure 16 de température et le deuxième organe de mesure 17 de température, au moins à partir de ladite valeur de la différence de température de la partie immergeable 12a de la sonde 12, de préférence subsidiairement corrélée avec la mesure de température du milieu réactionnel par capteur annexe de température, tel que le capteur secondaire 11a de température illustré.

On notera que le premier organe de mesure 16 de température et le deuxième organe de mesure 17 de température - ou tels que visés plus loin leurs potentiels composants 18 et 19 - ainsi que l'organe de chauffage 15, sont fixés à la face interne de la paroi de la partie immergeable 12a de la sonde 12 via une pâte thermique à fort coefficient de conductivité thermique. La paroi de la sonde 12 étant de préférence tubulaire et de faible épaisseur - comme illustré sur les figures 3 à 7 - la conductibilité thermique de la paroi de la sonde 12 est optimisée.

Selon les divers exemples avantageux de réalisation respectivement illustrés sur les figures 2 à 5 et 7, le premier organe de mesure 16 de température est formé d'au moins une première demi-pile thermocouple 18 et le deuxième organe de mesure 17 de température est formé d'au moins une deuxième demi-pile thermocouple 19. Ladite au moins une première demi-pile thermocouple 18 et ladite au moins une deuxième demi-pile thermocouple 19 sont conjointement constitutives d'au moins un thermocouple 18-19-20 formant un capteur de température, un tel thermocouple 18-19-20 étant typiquement agencé en un couple de fils électriquement conducteurs.

Selon les divers exemples de réalisation illustrés sur les figures 2 à 5, la zone de soudure chaude du dit au moins un thermocouple 18-19-20 est ménagée par la dite au moins une deuxième demi-pile thermocouple 19 et la zone de soudures froides du thermocouple 18-19-20 est ménagée par la dite au moins une première demi-pile thermocouple 18. Ceci permet de simplifier la transmission par ladite voie filaire 21 électro-conductrice, des données fournies par ledit au moins un thermocouple 18-19-20 à l'unité de mesure 13, qui dans ce cas au moins comporte un voltmètre qui est raccordé via la liaison filaire 13a à ladite voie filaire électro-conductrice 21.

Sur les figures 3 à 5, il est illustré différentes variantes respectives de réalisation de l'agencement de la partie immergeable 12a de la sonde 12 dotée d'au moins une dite première demi-pile thermocouple 18 et d'au moins une dite deuxième demi-pile thermocouple 19, qui sont selon les exemples de réalisation illustrés sur ces figures 3 à 5 respectivement constitutives du premier organe de mesure 16 de température et du deuxième organe de mesure 17 de température reliés entre eux par au moins une liaison filaire électrique 20 formée par le couple de fils électriquement conducteurs constitutifs des demi-piles thermocouple.

Selon l'exemple de réalisation illustré sur la figure 3, la partie immergeable 12a de la sonde 12 comporte un unique thermocouple 18-19-20 comprenant une seule première demi-pile thermocouple 18 et une seule deuxième demi-pile thermocouple 19 placée à distance D1 de la première zone 15a chauffée. La première demi-pile thermocouple 18 et la deuxième demi-pile thermocouple 19 sont reliées entre elles via une dite liaison filaire électrique 20 formée par le dit couple de fils électriquement conducteurs constitutifs à leurs extrémités des demi-piles thermocouple 18 et 19.

.La première demi-pile thermocouple 18 est raccordée électriquement via la voie filaire 21 électro-conductrice équipant la partie immergeable 12a de la sonde 12, la voie filaire 21 électro conductrice étant elle-même raccordée électriquement à ladite unité 13 via ladite liaison filaire 13a.

Selon l'exemple de réalisation illustré sur la figure 4, la sonde comporte plusieurs thermocouples 18-19-20 comprenant :

- ) une pluralité de premières demi-piles thermocouples 18 qui sont constitutives de sous-organes de mesure de température composant le premier organe de mesure 16 de température. Les premières demi-piles thermocouples 18 sont placées dans la première zone 15a de la partie immergeable 12a de la sonde 12, qui est chauffée par l'organe de chauffage 15, et
- ) une pluralité de deuxièmes demi-piles thermocouples 19 qui sont constitutives de sous-organes de mesure de température composant le deuxième organe de mesure 17 de température. Les deuxièmes demi-piles thermocouples 19 sont placées dans la deuxième zone 15b non chauffée de la partie immergeable 12a de la sonde 12 qui est distante D1 de ladite première zone 15a chauffée.

Chacune des pluralités de premières demi-piles thermocouples 18 et de deuxièmes demi-piles thermocouples 19 sont réparties suivant la circonférence de la face interne de la paroi tubulaire de la sonde 12 à sa partie inférieure immergeable 12a. Chacune des demi-piles thermocouples 18 est reliée à une deuxième demi-pile thermocouple 19 qui lui est affectée par une dite liaison filaire électrique 20 en formant ainsi collectivement plusieurs thermocouples 18-19-20 qui sont reliés en série. Les premières demi-piles thermocouple 18 sont raccordées électriquement à la voie filaire 21 électro-conductrice équipant la partie immergeable 12a de la sonde 12, qui est elle-même raccordée électriquement à ladite unité 13 via ladite liaison filaire 13a.

Selon l'exemple de réalisation illustré sur la figure 5, la sonde 12 comporte ) une pluralité de premières demi-piles thermocouples 18 qui sont constitutives de sous-organes de mesure de température composant le premier organe de mesure 16 de température qui est placé dans la première zone 15a chauffée de la partie immergeable 12a de la sonde 12. Les premières demi-piles thermocouples 18 sont successivement réparties suivant l'extension allongée de la partie immergeable 12a de la sonde 12.

- ) une pluralité de deuxième demi-piles thermocouple 19 constitutives de sous-organes de mesure de température composant le deuxième organe de mesure 17 de température placé dans la deuxième zone 15b de la partie immergeable 12a de la sonde 12, à distance D1 de la première zone 15a chauffée. Les demi-piles thermocouple 19 sont agencés dans la deuxième zone 15b de la partie immergeable 12a de la sonde 12, en étant réparties suivant la circonférence de la face interne de la paroi tubulaire de la sonde 12.

Les demi-piles thermocouple 19 sont respectivement connectées aux premières demi-piles thermocouples qui leur sont affectées, via ladite liaison filaire électrique 20, en formant une pluralité de thermocouples qui sont raccordés électriquement via la voie filaire 21 électro-conductrice qui est elle-même raccordée électriquement à ladite unité 13 via ladite liaison filaire 13a.

Un tel montage sur la partie immergeable 12a de la sonde 12 des premières demi-piles thermocouples 18 et des deuxièmes demi-piles thermocouples 19 permet de détecter le niveau du milieu réactionnel 4 contenu dans la chambre de réaction 3, et par suite d'identifier la surface d'échange thermique entre le milieu réactionnel 4 et la face interne 2a2 de l'enveloppe interne 2a du calorimètre 1 délimitant le réacteur - ou autrement dit la chambre de réaction 3 - qui est orientée vers le milieu réactionnel 4.

L'accès à la surface d'échange thermique entre le milieu réactionnel 4 et la face interne 2a de l'enveloppe intérieure permet de mesurer, exclusivement ou autrement dit uniquement via la sonde 12 partiellement immergée à l'intérieur du milieu réactionnel 4, la puissance thermique au travers de la double enveloppe 2 du calorimètre 1 en temps réel et en continu au cours de la réaction du milieu réactionnel 4 à l'intérieur de la chambre de réaction 3.

Sur les figures 6 et 7, il est notamment illustré l'architecture globale et l'organisation d'une sonde 12 relevant d'une forme avantageuse de réalisation de l'invention. La paroi 12d de la sonde est tubulaire en ménageant un canal interne 12c à l'intérieur de la sonde 12. L'extrémité inférieure 12e de la sonde 12 est fermée en conférant au canal interne 12c de la sonde 12 un caractère borgne interdisant toute infiltration du milieu 4 réactionnel à l'intérieur de la sonde 12.

Sur la figure 6, la sonde 12 est représentée entière, sans illustration détaillée de la totalité de son aménagement intérieur, notamment en ce qui concerne sa partie inférieure immergeable 12a. La figure 7 illustre un détail de la sonde 12 illustrée sur la figure 6, et plus spécifiquement sa partie immergeable 12a et les équipements constitutifs du dispositif de mesure 14 de température dont elle est pourvue - tels que pour exemple ceux illustrés sur la figure 3 - qui sont logés à l'intérieur du canal interne 12c de la sonde 12 à sa partie inférieure immergeable 12a.

Sur la figure 6, le canal interne 12c de la sonde 12 s'étend depuis l'extrémité inférieure 12e borgne de la sonde 12 jusqu'à l'extrémité supérieure 12f de la sonde 12. Le canal interne 12c de la sonde 12 loge un support 22 sur lequel sont installés les composants du dispositif de mesure 14 à l'intérieur du canal interne dans sa partie d'extension de la partie immergeable 12a de la sonde12, comme illustré sur la figure 7.

L'extrémité supérieure 12f de la sonde 12 comporte un débouché 12g prévu d'être orienté vers l'extérieur du milieu 4 réactionnel - et plus spécifiquement de préférence hors du calorimètre 1 - pour permettre le passage de la liaison filaire 13a reliant à ladite unité 13 le dispositif de mesure 14 équipant la partie immergeable 12a de la sonde 12.

Sur la figure 7, le support 22 est avantageusement formé d'un circuit imprimé comportant des pistes électro-conductrices et sur lequel sont gravés ou fixés - via une pâte thermique - une première demi-pile thermocouples 18 et une deuxième demi-pile thermocouple 19 constitutive d'un thermocouple 18-19-20. L'organe de chauffage 15 - avantageusement formé d'un film chauffant - est fixé à la face interne de la paroi 12d de la sonde 12 via une pâte thermique en entourant la première demi-pile thermocouples 18.

La première demi-pile thermocouples 18 est reliée à une piste du circuit imprimé formant la voie filaire électro-conductrice 21 pour sa connexion à ladite unité 13 via ladite liaison filaire 13a fixée à l'une de ses extrémités au support 22 et raccordée à l'unité 13. Un conducteur 23 d'énergie - notamment d'énergie électrique et potentiellement de préférence formé d'une piste du circuit imprimé - s'étend depuis l'organe de chauffage 15 vers l'extérieur de la sonde 12, en étant relié à ladite liaison filaire 13a conjointement avec ladite voie filaire électro-conductrice 21 reliant le dispositif de mesure 14 à ladite unité 13. On notera que ledit conducteur 23 d'énergie électrique peut être mis à profit pour réguler la température de l'organe de chauffage 15 sous contrôle de ladite unité 13.

On notera que l'appareil de mesure 10 identifie la valeur du coefficient de transfert thermique interne du milieu 4, et que les paramètres relatifs à l'épaisseur et à la conductivité thermique de la paroi interne 2a2 de la double enveloppe 2 du calorimètre 1, ainsi que le coefficient d'échange thermique entre le fluide thermique 9 et la face externe 2a1 de l'enveloppe interne 2a sont facilement accessibles. Par suite, l'appareil de mesure 10 non seulement est apte à identifier le coefficient de transfert thermique interne du milieu 4 réactionnel, mais aussi de calculer en temps réel et en continu au cours de la réaction du milieu 4 réactionnel le coefficient d'échange thermique global entre le milieu 4 réactionnel et le fluide thermique 9. Ceci permet de calculer la puissance d'échange thermique au travers de la double enveloppe 2, sans utiliser d'autres équipements que l'appareil de mesure 10 tels que par exemple des capteurs de flux de chaleur et/ou une sonde de calibration dudit coefficient d'échange thermique global.

**Revendications**

1. Appareil de mesure (10) d'une valeur du coefficient de transfert thermique interne d'un milieu (4), tel qu'un milieu réactionnel, ledit appareil de mesure (10) comprenant au moins :

   - une sonde (12), ladite sonde (12) étant au moins équipée :

     *) d'au moins un organe de chauffage (15) d'une première zone (15a) d'une partie immergeable (12a) de la sonde (12) qui est destinée à être immergée à l'intérieur dudit milieu (4), et
     *) d'au moins un premier organe de mesure (16) de température et d'au moins un deuxième organe de mesure (17) de température, le premier organe de mesure (16) de température étant placé en contact thermique avec la première zone (15a) de la sonde (12) et le deuxième organe de mesure (17) de température étant placé en contact thermique avec une deuxième zone (15b) de la partie immergeable (12a) de la sonde (12) qui est distante (D1) de ladite première zone (15a), ledit au moins un premier organe de mesure (16) de température et ledit au moins un deuxième organe de mesure (17) de température étant configurés pour fournir une valeur relative à une différence de température entre ladite première zone (15a) de la partie immergeable (12a) de la sonde (12) et ladite deuxième zone (15b) de la partie immergeable (12a) de la sonde (12),

     - une unité (13) d'identification d'une différence de température de la partie immergeable (12a) de la sonde (12) à partir des données fournies à ladite l'unité (13) par ladite sonde (12), ladite unité (13) étant configurée pour récupérer la valeur relative à une différence de température entre ladite première zone (15a) de la partie immergeable (12a) de la sonde (12) et ladite deuxième zone (15b) de la partie immergeable (12a) de la sonde (12), et pour identifier la valeur du coefficient de transfert thermique interne dudit milieu (4) à partir d'une valeur de température du milieu (4) et de ladite valeur relative à une différence de température entre ladite première zone (15a) de la partie immergeable (12a) de la sonde (12) et ladite deuxième zone (15b) de la partie immergeable (12a) de la sonde (12).

2. Appareil de mesure (10) la revendication 1, dans lequel ledit au moins un premier organe de mesure (16) de température et ledit au moins un deuxième organe de mesure (17) de température sont espacés à distance l'un de l'autre sur la partie immergeable (12a) de la sonde (12) d'une distance (D1) supérieure ou égale à 5 mm, tel qu'avantageusement supérieure ou égale à 1 cm.

3. Appareil de mesure (10) selon l'une quelconque des revendications 1 à 2, dans lequel ledit au moins un premier organe de mesure (16) de température comprend au moins une première demi-pile thermocouple (18) et le deuxième organe de mesure (17) de température comprend au moins une deuxième demi-pile thermocouple (19), ladite au moins une première demi-pile thermocouple (18) et ladite au moins une deuxième demi-pile thermocouple (19) étant constitutives d'un thermocouple (18,19,20) de mesure de ladite valeur relative à une différence de température entre ladite première zone (15a) de la partie immergeable (12a) de la sonde (12) et ladite deuxième zone (15b) de la partie immergeable (12a) de la sonde (12).

4. Appareil de mesure (10) selon la revendication 3, dans lequel le premier organe de mesure (16) de température comprend au moins deux premières demi-piles thermocouples (18) et le deuxième organe de mesure (17) de température comprend au moins deux deuxièmes demi-piles thermocouples (18), chaque première demi-pile thermocouple (18) formant avec une deuxième demi-pile thermocouple (19) qui lui est affectée un thermocouple (18,19,20), les thermocouples (18,19,20) respectivement formés par lesdites au moins deux premières demi-piles thermocouples (18) et lesdites au moins deux deuxièmes demi-piles thermocouples (19) étant reliés en série.

5. Appareil de mesure (10) selon l'une quelconque des revendications 1 à 3, dans lequel le premier organe de mesure (16) de température et le deuxième organe de mesure (17) de température sont respectivement un premier capteur de température et un deuxième capteur de température agencés pour fournir une température respectivement de la première zone (15a) et de la deuxième zone (15b) de la partie immergeable (12a) de la sonde (12).

6. Appareil de mesure (10) selon l'une quelconque des revendications 1 à 5, dans lequel :

   - ) ledit organe de chauffage (15) est configuré pour transférer de la chaleur dans ladite première zone (15a) de la partie immergeable (12a) de la sonde (12), ladite première zone (15a) étant sensiblement d'extension allongée et destinée à présenter une orientation verticale à l'intérieur du milieu (4), et
   - ) le premier organe de mesure (16) de température comprend une pluralité de sous-organes de mesure (18) agencés pour s'étendre le long de ladite première zone (15a) de la partie immergeable (12a) de la sonde (12).

7. Appareil de mesure (10) selon les revendications 3 et 6, dans lequel chacun des sous-organes de mesure du premier organe de mesure (16) est une première demi-pile thermocouple (18), le deuxième organe de mesure (17) comprenant, pour chacune desdites premières demi-piles thermocouples (18), une deuxième demi-pile thermocouple (19), la première demi-pile thermocouple (18) de chacun des sous-organes de mesure du premier organe de mesure (16) étant conformée pour être connectée (20) avec la deuxième demi-pile thermocouple (19) correspondante du deuxième organe de mesure (17) afin de former des thermocouples respectifs.

8. Appareil de mesure selon l'une quelconque des revendications 1 à 7, dans lequel :

   - ) ladite sonde (12) comporte en outre une partie émergente (12b) s'étendant en prolongement de ladite partie immergeable (12a) de la sonde (12) suivant une extension allongée de la sonde (12), la partie émergente (12b) de la sonde (12) étant destinée à s'étendre au moins hors du milieu (4), et
   - ) ladite sonde (12) est de conformation tubulaire en ménageant un canal interne (12c) logeant ledit au moins un organe de chauffage (15), ledit au moins un premier organe de mesure (16) de température et ledit au moins un deuxième organe de mesure (17) de température, et est en outre équipée d'une liaison filaire (13a) de transmission à ladite unité (13) de la valeur relative à une différence de température entre ladite première zone (15a) de la partie immergeable (12a) de la sonde (12) et ladite deuxième zone (15b) de la partie immergeable (12a) de la sonde (12), ainsi qu'un conducteur (23) d'alimentation en énergie de l'organe de chauffage (15).

9. Appareil de mesure (10) selon l'une quelconque des revendications 1 à 8, dans lequel la sonde (12) est en outre équipée d'un capteur de température secondaire (11a) apte à fournir une valeur de température du milieu (4), l'unité (13) étant en outre configurée pour récupérer la valeur de température du milieu (4) fournie par le capteur de température secondaire (11a).

10. Calorimètre (1) comportant une chambre de réaction (3) destinée à contenir un milieu (4), tel qu'un milieu réactionnel, ledit calorimètre (1) comprenant en outre au moins un appareil de mesure (10) d'un coefficient de transfert thermique interne du milieu (4) selon l'une quelconque des revendications 1 à 9.

11. Procédé de détermination d'un coefficient de transfert thermique interne d'un milieu (4), tel qu'un milieu réactionnel, mettant en oeuvre un appareil de mesure selon l'une quelconque des revendications 1 à 9, comprenant les opérations suivantes :

   - ) chauffage de ladite première zone (15a) de la partie immergeable (12a) de la sonde (12),

- ) fourniture par ledit au moins un premier organe de mesure (16) de température et ledit au moins un deuxième organe de mesure (17) de température d'une valeur relative à une différence de température entre ladite première zone (15a) de la partie immergeable (12a) de la sonde (12) et ladite deuxième zone (15b) de la partie immergeable (12a) de la sonde (12),

- ) récupération par l'unité (13) de la valeur relative à une différence de température entre ladite première zone (15a) de la partie immergeable (12a) de la sonde (12) et ladite deuxième zone (15b) de la partie immergeable (12a) de la sonde (12),

- ) récupération par l'unité (13) d'une valeur de température du milieu (4),

- ) identification par ladite unité (13) de la valeur du coefficient de transfert thermique interne (hmr) dudit milieu (4) à partir de la valeur de température du milieu (4) et de ladite valeur relative à une différence de température entre ladite première zone (15a) de la partie immergeable (12a) de la sonde (12) et ladite deuxième zone (15b) de la partie immergeable (12a) de la sonde (12).

12. Procédé de détermination d'un coefficient de transfert thermique interne (hmr) d'un milieu (4) selon la revendication 11, dans lequel la valeur du coefficient de transfert thermique interne (hmr) du milieu (4) est identifié par ladite unité (13) par application de l'un quelconque des modèles mathématiques suivants selon lesquels :

$$hmr = \frac{Psonde}{Asonde \ x \ \Delta Tsonde}$$

- ) dans lequel **Psonde** est la puissance dissipée par l'élément de chauffage de la sonde, **A**sonde est. la surface effective de la zone chauffante en regard du milieu réactionnel, et ΔTsonde est.la mesure de différence de température entre les deux zones de la sonde, ou

$$hmr = \frac{K}{\Delta T}$$

- ) dans lequel ΔT est.la mesure de la différence de température entre les deux dites zones de la sonde, et K est un coefficient déterminé lors d'un étalonnage.

13. Procédé de détermination d'un coefficient de transfert thermique interne (hmr) d'un milieu (4) selon la revendication 11 ou 12 permettant en outre la détermination d'un coefficient de transfert thermique global entre une double enveloppe et le milieu (4), dans lequel le procédé est mis en oeuvre au moyen d'un réacteur (1) comportant une chambre de réaction (3) contenant le milieu (4) et une double enveloppe (2) délimitant ladite chambre de réaction, dans laquelle double enveloppe (2) étant ménagée une chambre de régulation thermique du milieu (4),
ledit procédé de détermination d'un coefficient de transfert interne (hmr) d'un milieu (4) comprenant en outre une opération supplémentaire de détermination, à partir d'une température double enveloppe TDE et du coefficient de transfert thermique interne identifié pour le milieu (4), une puissance thermique de la double enveloppe (2), et éventuellement une puissance thermique d'une réaction chimique du milieu (4).

14. Procédé de détermination d'un coefficient de transfert thermique interne (hmr) d'un milieu (4) selon l'une quelconque des revendications 11 à 13, dans lequel il est en outre compris une opération supplémentaire de détermination d'un coefficient de transfert thermique interne d'un milieu pour un réacteur industriel ou d'un coefficient de transfert thermique global pour ce même réacteur industriel à partir du coefficient de transfert thermique interne (hmr) déterminé par l'unité (13).

FIG.1

FIG.2

FIG.5

FIG.4

FIG.3

FIG.6

FIG.7

Europäisches
Patentamt

European
Patent Office

Office européen
des brevets

# RAPPORT DE RECHERCHE EUROPEENNE

Numéro de la demande

**EP 24 18 5159**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 4 750 357 A (ANDERSON DAVID H [US] ET AL) 14 juin 1988 (1988-06-14) | 1,2,5, 11,12 | INV.<br>G01N25/20 |
| Y | * colonne 1, ligne 5 - colonne 3, ligne 53 * <br> * figures 1-3 * <br> ----- | 3,4, 6-10,13, 14 | G01K19/00<br>G01N25/48 |
| Y | RICHARD A GROT ET AL: "Measurement methods for evaluation of thermal integrity of building envelopes NBS IR 82-2605", NIST report, NATIONAL INSTITUTE OF STANDARDS AND TECHNOLOGY (NIST) , 31 décembre 1982 (1982-12-31), pages 1-127, XP061041974, DOI: 10.6028/NBS.IR.82-2605 Extrait de l'Internet: URL:https://nvlpubs.nist.gov/nistpubs/Legacy/IR/nbsir82-2605.pdf [extrait le 1982-12-31] * abrégé * <br> * page 102, alinéa 1 - page 104, alinéa 2 * <br> * figure 8.1 * <br> ----- | 3,4,6,7 | |
| Y | JP 2013 113808 A (TOSHIBA CORP) 10 juin 2013 (2013-06-10) * abrégé * <br> * figure 3B * <br> ----- <br> -/-- | 6-8 | DOMAINES TECHNIQUES RECHERCHES (IPC)<br><br>G01N<br>G01W<br>G01K<br>G01F |

Le présent rapport a été établi pour toutes les revendications

| Lieu de la recherche | Date d'achèvement de la recherche | Examinateur |
|---|---|---|
| La Haye | 12 novembre 2024 | Couteau, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 24 18 5159

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | GARMROODI ASIL A ET AL: "Reliable prediction of heat transfer coefficient in three-phase bubble column reactor via adaptive neuro-fuzzy inference system and regularization network", HEAT AND MASS TRANSFER, SPRINGER BERLIN HEIDELBERG, BERLIN/HEIDELBERG, vol. 54, no. 10, 12 avril 2018 (2018-04-12), pages 2975-2986, XP036588793, ISSN: 0947-7411, DOI: 10.1007/S00231-018-2332-4 [extrait le 2018-04-12] * abrégé * * page 2980, colonne de droite, alinéa 2 – page 2981, colonne de droite, alinéa 2 * * figures 4,5 * ----- | 9 | |
| Y | KOSSOY ARCADY: "Reaction calorimetry: Main types, simple theory, and application for kinetic study-A review", PROCESS SAFETY PROGRESS, vol. 42, no. 3, 7 avril 2023 (2023-04-07), pages 417-429, XP093222347, US ISSN: 1066-8527, DOI: 10.1002/prs.12452 * abrégé * * page 418, colonne de droite, alinéa 3 * * page 420, colonne de gauche, alinéa 4-6 * * Equations (6) and (7) * * figure 1 * ----- | 10,13,14 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 12 novembre 2024 | Couteau, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 18 5159

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-11-2024

| Document brevet cité au rapport de recherche | | Date de publication | Membre(s) de la famille de brevet(s) | Date de publication |
|---|---|---|---|---|
| US 4750357 | A | 14-06-1988 | AUCUN | |
| JP 2013113808 | A | 10-06-2013 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 2840986